# EUROPEAN PATENT SPECIFICATION

(11) **EP 2 816 063 B1**
(45) Date of publication and mention of the grant of the patent: **14.12.2016**
(21) Application number: 13192272.6
(22) Date of filing: 11.11.2013
(51) Int. Cl.: C08G 18/64, C08G 18/75, C08G 18/28

(54) **Method of preparation of stabilized polyethylene**
Verfahren zur Herstellung von stabilisiertem Polyethylen
Procédé de préparation de polyéthylène stabilisé

(30) Priority: 18.06.2013 CZ 20130467
(43) Date of publication of application: 24.12.2014
(73) Proprietor: SYNPO, akciova spolecnost, 53207 Pardubice (CZ); Univerzita Pardubice, 532 10 Pardubice (CZ); Gabriel-Chemie Bohemia s.r.o., 53341 Lazne Bohdanec (CZ)
(72) Inventor: Spacek, Vladimír, 53009 Pardubice (CZ); Vecera, Miroslav, 53003 Pardubice (CZ); Prokupek, Lubo, 53002 Spojil (CZ); Nádvorníková, Zuzana, 50003 Hradec Králové (CZ); Zárybnická, Lucie, 67401 T ebí (CZ); Linhart, Karel, 53012 Pardubice (CZ)
(74) Representative: Musil, Dobroslav

(56) References cited:
- EP-A1- 0 468 418
- US-A- 5 280 084
- US-A- 5 849 368
- DESAI S M ET AL: "A NOVEL PHOTOADDITIVE FOR POLYOLEFIN PHOTOSTABILIZATION: HINDERED AMINE LIGHT STABILIZER", MACROMOLECULAR SYMPOSIA, WILEY VCH VERLAG, WEINHEIM, DE, no. 169, 1 May 2001 (2001-05-01), pages 121-128, XP001077156, ISSN: 1022-1360, DOI: 10.1002/1521-3900(200105)169:1<121::AID-MA SY121>3.0.CO;2-H
- LEE TAIK K. ET AL.: "Plasma modification of polyolefin surfaces", PACKAGING TECHNOLOGY AND SCIENCE, vol. 22, 3 October 2008 (2008-10-03), pages 139-150, XP002719583,

## Description

### Technical field

The invention relates to a method of preparation of a polyethylene (PE) stabilized against influences of the surrounding environment, while the polyethylene (PE) is first plasma-treated, by which means hydroxyl and/or amine functional groups are formed on the surface of PE.

### Background art

A polymer exposed to the influences of the surrounding environment, such as the effects of solar radiation or the impact of increased temperature, is subject to degradation, which usually manifests itself in a change of colour and in a loss of physical (mechanical) properties. The degradation of the polymer can be reduced or even completely eliminated by adding a suitable stabilizer to the polymer. However, after forming a polymer with stabilizers, the stabilizer concentration in the polymer decreases over a period of time, especially by evaporation, due to cleaning, due to the effect of solvents, etc. One of the factors which influence the efficiency of a particular stabilizer in a particular polymer, is the ability of the stabilizer to maintain its concentration in the polymer system. Low volatility of stabilizers is required especially in the car industry and in plastic materials intended to come into contact with foods. Nevertheless, the stabilizer also has to display activity of the stabilizing group during the whole period of time, as well as compatibility with the polymer system. This leads to the pursuit to develop less volatile stabilizers with improved compatibility with the polymer system, i.e. to develop such stabilizers whose concentration does not decrease in the polymer at an increased temperature during the processing of the polymer or subsequently due to the influence of the surrounding environment on the stabilized polymer. The result of this effort are high molecular weight stabilizers, which reduce the above-mentioned drawbacks.

One of the known solutions are those according to EP 303 986 and EP 303 988, which describe polymers with repeating units and a method of their preparation. The disadvantage of these solutions is especially the necessity to prepare hydrazides or amide stabilizers. These are then bound, for example, to a polymer (copolymer) containing for example anhydride groups (usually a copolymer with maleic anhydride). These anhydride groups containing copolymers are either commercially produced or it is necessary to prepare them specially.

DESAI s M ET AL: "A NOVEL PHOTOADDITIVE FOR POLYOLEFIN PHOTOSTABILIZATION: HINDERED AMINE LIGHT STABILIZER", MACROMOLECULAR SYMPOSIA, WILEY VCH VERLAG, WEINHEIM, DE, no. 169, 1 May 2001 (2001-05-01), pages 121-128, XPOO107715 ISSN: 1022-1360, DOI: 10.1002/1521-3900(200105)169:1 121 ::AID-MASY1213.0.CO;2-H, relates to adding a stabilizer to polyethylene, however, for adding a stabilizer the method of photo-grafting is used and the reactions involved are from the chemical point of view totally different, especially using anhydride of succinic acid, which reacts with -OH groups on the surface of plasma treated PE and in the stabilizer.

LEE TAIK K. ET AL.: "Plasma modification of polyolefin surfaces", PACKAGING TECHNOLOGY AND SCIENCE, vol. 22, 3 October 2008 (2008-10-03), pages 139-150, XPO02719583, mentions using plasma treatment of the surface of PE, it is solely for the purpose of maximizing the surface energy of the treated PE, not for the purpose of adding a stabilizer, as is the case in our solution. Plasma treatment of PE according to this document, i.e. maximizing the surface energy, is used for completely different purposes, not for binding a stabilizer. Moreover, plasma treatment of PE itself is not the subject-matter of our application - it is only one of the features of a method which we claim.

US 5 280 084 describes a method in which in the first step the surface of polymer is subjected to plasma treatment and in the second step a suitable substance is bound to the polymer thus treated to increase the hydrophilicity of the surface. One of these compounds is isocyanate. US 5 280 084 aims at increasing the hydrophilicity of the surface, for improving gluing, adhesion, printing etc., which is utterly different usage than the stabilization of polyethylene to resist light radiation, which is the subject of our application. As is stated in US 5 280 084 in column 5, lines 32 to 48, residual functional groups wiil remain on the surface of hydrophilized polymer, but only a limited amount of them, which allow binding other functional groups for further hydrophilization of the polymer.

The goal of the invention is to create a stabilized polyethylene (PE).

### Principle of invention

The objective of the invention is achieved by a method of preparation of a polyethylene (PE) stabilized against influences of the surrounding environment, whose principle consists in that to hydroxyl and/or amine functional groups is in the following step bounded either methacryoyl chloride or an additive with reactive -NCO groups and in third step to the methacryoyl chloride or to the additive with reactive -NCO groups is bounded by its -OH, -NH or -NH₂ groups at least one stabilizer.

### Specific description

The invention will be described on examples of preparation of a stabilized polyethylene (hereinafter referred to as "PE").

During the stabilization of the polyethylene (PE), PE in a suitable form, for example in the form of powder, etc., is first plasma treated, i.e. it is subjected to treatment by means of plasma, wherewith the surface of PE is hydrophilized (e.g. for adhesion, for permitting the preparation of colour concentrates with certain types of colour agents or pigments etc.) and simultaneously -OH groups and/or -NH groups are formed on the surface of the PE particles. By this procedure the so-called plasma-treated PE is prepared, the term plasma-treated PE being used hereinafter. Hydroxyl groups, or, as the case may be, amino groups of the plasma-treated PE are able to react with -NCO groups, for example with -NCO groups of isophorone diisocyanate (IPDI), by which means reactive -NCO groups are formed on the plasma-treated PE and in the next step they are bound to a stabilizer or stabilizers containing hydroxyl or amino groups.

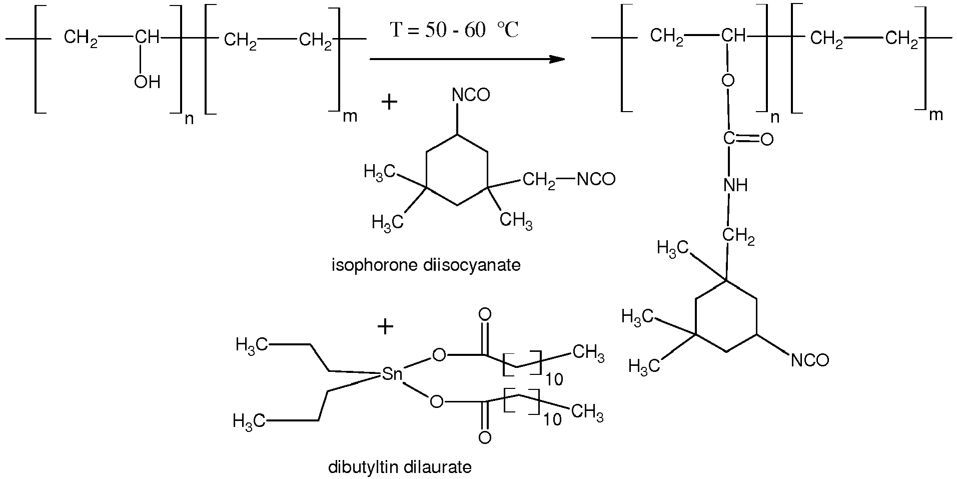

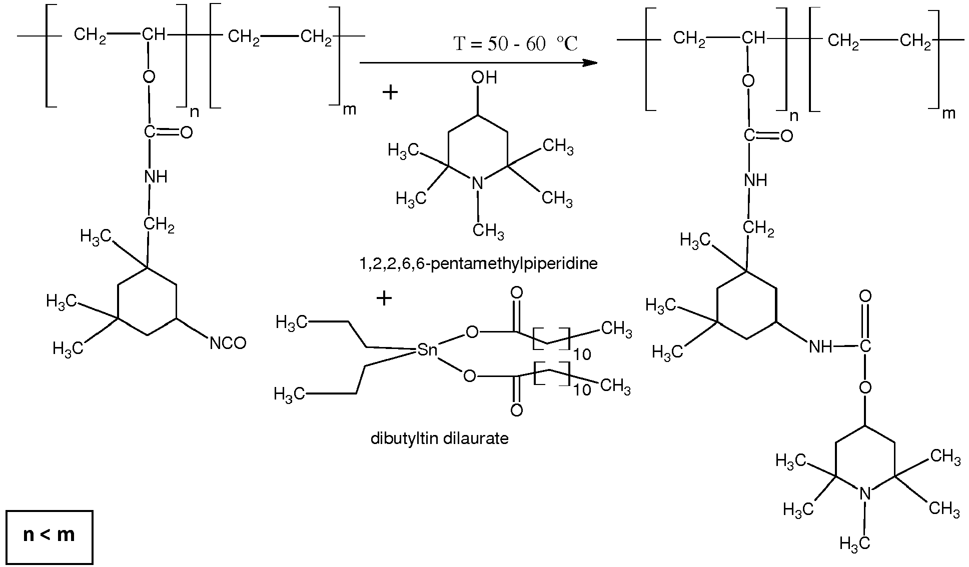

Diisocyanate, preferably isophorone diisocyanate, has two isocyanate groups with different reactivity, which is a limiting factor to possible cross-linking formation.

The plasma-treated PE containing hydroxyl and/or amino functional groups reacts with methacryoyl chloride. In this manner polymerizable methacryle groups are formed on the surface of PE. This newly formed reactive group is able to copolymerize, for example via a radical mechanism, with a polymerizable stabilizer. These stabilizers are commercially available or they can be synthesized from stabilizers containing a hydroxyl or amino group, e.g again by reaction with methacryoyl chloride.

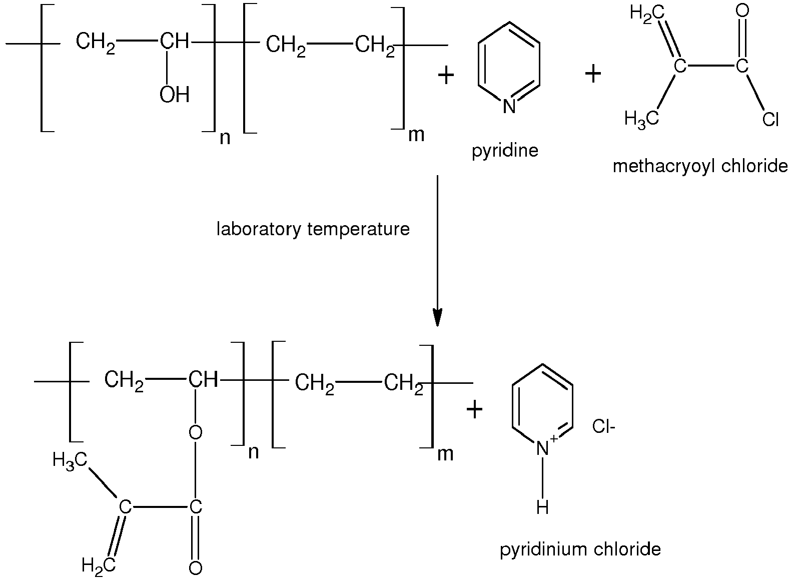

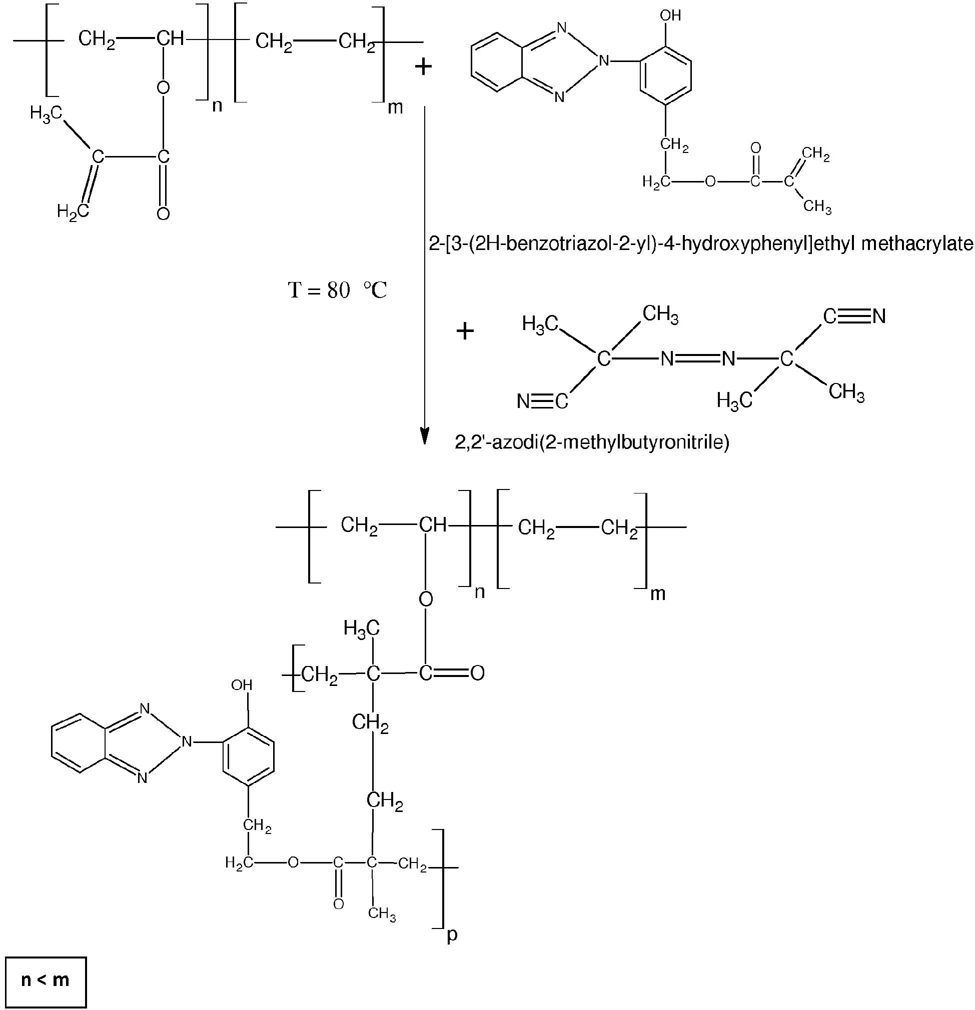

Hereinafter, concrete examples of embodiments of the invention of the method of the stabilization of PE will be described.

### Preparation of plasma-treated PE with 1,2,2,6,6-pentamethyl-4-piperidinol

A plasma-treated PE in the amount of 1 g is dispersed in 30 ml of n-hexane. 0.3 g of IPDI in an excess and 0.0167 g of dibutyltin dilaurate (DBTL) is added to the mixture. The mixture is stirred in inert atmosphere for a period of 2 hours at a temperature of 50 - 60 °C. This is followed by cooling the mixture and by its filtration. Subsequently, the mixture is dried in vacuum oven at 55 °C. In this first step of the synthesis, diisocyanate (isophorone diisocyanate) is attached to the plasma treated PE

In the next - second - step of the synthesis, a selected stabilizer reacts with remaining isocyanate groups of isophorone diisocyanate (IPDI), bound to the plasma-treated PE in the first step of the synthesis. The plasma-treated PE containing isocyanate groups in an amount of 0.63 g is dipersed in 40 ml of n-hexane and 0.0167g DBTL and 0.03g 1,2,2,6,6-pentamethyl-4-piperidinol is added to the reaction mixture. The mixture is stirred for a period of 3 hours at 50 - 60 °C in of in inert atmosphere (argon). Afterwards the reaction mixture is cooled, filtered and dried at a temperature of approximately 55 °C.

### Preparation of plasma-treated PE with 2-(3-(2H-benzotriazol-2-yl)-4-hydroxyphenyl)- ethyl methacrylate

Plasma-treated PE in the amount of 1 g is dispersed in 30 ml of n-hexane and 0.1 g (0.093 ml) of methacryoyl chloride and 0.08 g (0.082 ml) of pyridine is added. The resulting mixture is stirred for one hour at a laboratory temperature. After that the mixture is washed with a mixture of methanol and water (1:1) and finally it is washed with pure methanol. This is followed by vacuum drying at a temperature of 60 °C.

0.3g of 2-(3-(2H-benzotriazol-2-yl)-4-hydroxyphenyl)ethyl methacrylate, 6 ml of benzen and 0.05 g of VAZO 67 (a radical initiator 2,2'-azobis(3-methylbutyronitril) is added to the prepared product. This mixture is then stirred for a period of 2 hours at a temperature of 80 °C, subsequently it is filtered and vacuum dried at 50 °C.

The results of the testing of PE stabilized according to the two examples mentioned above are shown in the following chart.

| Sample | C [%] | H [%] | N [%] | Estimated amount of bound stabilizer [wt.%] |
|---|---|---|---|---|
| Plasma-treated PE with - OH groups | 88.21 | 8.06 | < 0.3 | - |
| PE + 1,2,2,6,6-pentamethyl-4-piperidinol | 84.02 | 14.09 | 0.89 | 6.86 |
| PE + 2-(3-(2H-benzotriazol-2-yl)-4-hydroxyphenyl)ethyl methacrylate | 84.56 | 14.03 | 0.55 | 3.68 |

### Preparation of plasma-treated PE with "methacrylate stabilizer"

"Methacrylate stabilizer" is prepared by the reaction of for example 3,5-di-*tert-*buthyl-4-hydroxybenzyl alcohol with methacryoyl chloride in the presence of pyridine. 3,5-di-*tert-*buthyl-4-hydroxybenzyl alcohol acts as an antioxidant. 0.5 g of pyridine is added to 3,5-di-*tert-*butyl-4-hydroxybenzyl alcohol in an amount of 1.13 g and all is dissolved in 40 ml THF. 0.5 g methacryoyl chloride is added to the prepared mixture while stirring without warming. The resulting mixture is stirred for another hour without warming. After that the mixture is filtered and excess components are subsequently removed. The prepared polymerizable stabilizer further reacts with the treated PE (see the preparation of a stabilized PE with 2-(3-(2H-benzotriazol-2-yl)-4-hydroxyphenyl)ethyl methacrylate).

Both methods of preparation of a stabilized PE can be combined.

Additives with functional -NCO groups are added molarly in an amount corresponding to the number of moles of functional groups formed by plasma treatment of PE (a molar ratio of 1 : 1). The number of the reactive groups arising as a result of plasma treatment of PE is in the range of 0.1 - 10% by weight, whereby the -NCO functional groups react with a suitable stabilizer again in 1 : 1 molar ratio.

The additive methalcryloyl chloride is added molarly in an amount corresponding to the number of moles of the functional groups formed by plasma treatment of PE (a molar ratio of 1 : 1). The number of the reactive groups arising as a result of plasma treatment of PE is in the range of 0.1 - 10% by weight, whereby the methacrylate groups react with a suitable polymerizable stabilizer again in a molar ratio of 1 : 1 or higher.

## Claims

1. A method of preparation of a polyethylene (PE) stabilized against influences of the surrounding environment, while the polyethylene (PE) is first plasma-treated, by which means hydroxyl and/or amine functional groups are formed on the surface of PE, **characterized in that** to hydroxyl and/or amine functional groups is in the following step bounded either methacryoyl chloride , capable of copolymerization with a polymerizable stabilizer, or an additive with reactive -NCO groups and to the additive with reactive -NCO groups is bounded by its -OH, -NH or -NH₂ groups at least one stabilizer.

2. A method according to Claim 1, **characterized in that** as additive containing reactive -NCO groups is diisocyanate.

3. A method according to Claim 1, **characterized in that** as stabilizer for binding to -NCO functional groups of the additive is a stabilizer containing a reactable hydroxyl or amino group.

4. A method according to Claim 3, **characterized in that** as stabilizer is 1,2,2,6,6-pentamethyl-4-piperidinol.

5. A method according to Claim 1, **characterized in that** as stabilizer is polymerizable methacrylate stabilizer capable of copolymerization with methacryoyl chloride.

6. A method according to Claim 5, **characterized in that** as stabilizer is 2-(3-(2H-benzotriazol-2-yl)-4-hydroxyphenyl) ethyl methacrylate.

7. A method according to Claim 1, **characterized in that** the amount of the additive with functional -NCO groups molarly corresponds with the number of moles of the functional groups formed by the plasma treatment of PE and the amount of the stabilizer in relation to the amount of -NCO functional groups is in a molar ratio of 1 : 1.

8. A method according to Claim 1, **characterized in that** the amount of methalcryloyl chloride molarly corresponds with the number of moles of the functional groups formed by the plasma treatment of PE, whereby the amount of the functional groups formed by the plasma treatment of PE is in the range of 0.1 - 10% by weight and the methacrylate groups react with a polymerizable stabilizer in a molar ratio of 1 : 1 or higher.

## Patentansprüche

1. Verfahren zur Polyethylenvorbereitung (PE), das gegen Umgebungseinflüsse stabilisiert ist, bei dem das Polyethylen (PE) zuerst plasmabehandelt wird, wodurch auf der Polyethylenoberfläche Hydroxyl- und/oder Aminfunktionsgruppen gebildet werden, **dadurch gekennzeichnet, dass** an die Hydroxyl- und/oder Aminfunktionsgruppen in dem weiteren Schritt entweder Methakryolylchlorid, der zur Kopolymerisierung mit dem polymerisierbaren Stabilisator fähig ist, oder Zusatzstoff mit den reaktiven - NCO-Gruppen gebunden werden und an den Zusatzstoff mit den reaktiven - NCO-Gruppen mit ihren -OH, -NH oder -NH₂ mindestens ein Stabilisator gebunden wird.

2. Verfahren nach dem Anspruch 1, **dadurch gekennzeichnet, dass** der Zusatzstoff mit den reaktiven -NCO-Gruppen Diisokyanat ist.

3. Verfahren nach dem Anspruch 1, **dadurch gekennzeichnet, dass** der Stabilisator für die Anbindung an -NCO-Funktionsgruppen des Zusatzstoffes der Stabilisator ist, der eine reagierbare Hydroxyl- oder Amingruppe enthält.

4. Verfahren nach dem Anspruch 3, **dadurch gekennzeichnet, dass** der Stabilisator 1,2,2,6,6-Pentamethyl-4-Piperidinol ist.

5. Verfahren nach dem Anspruch 1, **dadurch gekennzeichnet, dass** der Stabilisator der polymerisierbare Methakrylatstabilisator ist, der zur Kopolymerisierung mit dem Methakryloylchlorid fähig ist.

6. Verfahren nach dem Anspruch 5, **dadurch gekennzeichnet, dass** der Stabilisator 2-(3-(2H-Benzotriazol-2-yl)-4-Hydroxyfenyl) Ethylmethakrylat ist.

7. Verfahren nach dem Anspruch 1, **dadurch gekennzeichnet, dass** die Menge des Zusatzstoffes mit den -NCO-Funktionsgruppen der Molzahl der Funktionsgruppen molar entspricht, die durch die Plasmabehandlung von PE gebildet werden und die Menge des Stabilisators gegenüber der Menge der-NCO-Funktionsgruppen in dem Molarverhältnis 1 : 1 steht.

8. Verfahren nach dem Anspruch 1, **dadurch gekennzeichnet, dass** die Menge des Methakryloylchlorids der Molzahl der Funktionsgruppen molar entspricht, die durch die Plasmabehandlung von PE gebildet werden, wobei die Menge der Funktionsgruppen, die durch die Plasmabehandlung von PE entstanden sind, 0,1 bis 10% Gew. ist und Methakrylatgruppen mit dem polymerisierbaren Stabilisator in dem Molarverhältnis von 1 : 1 oder höher reagiert werden.

## Revendications

1. Procédé de la préparation du polyéthylène (PE) stabilisé contre les influences de l'environnement, dans lequel le polyéthylène (PE) est d'abord traité au plasma pour créer à la surface de PE les groupes fonctionnels hydroxyle et / ou amine, **caractérisé en ce que** dans l'étape suivante aux groupes fonctionnels hydroxyle et / ou amine se fixe soit le methacryloyl-chlorid qui est capable de copolymérisation avec un stabilisant polymérisable, soit un additif ayant les groupes -NCO réactifs et ensuite à cet additif ayant les groupes -NCO réactifs se fixe au moins un stabilisant par ses OH, -NH ou -NH2.

2. Procédé selon la revendication 1, **caractérisé en ce que** l'additif ayant les groupes -NCO réactifs est le diisocyanate.

3. Procédé selon la revendication 1, **caractérisé en ce que** le stabilisant pour la liaison avec les groupes fonctionnels - NCO de l'additif est le stabilisant contenant le groupe hydroxyle ou amino qui sont capables de réagir.

4. Procédé selon la revendication 3, **caractérisé en ce que** le stabilisant est le 1,2,2,6,6-pentaméthyl-4-pipéridinol.

5. Procédé selon la revendication 1, **caractérisé en ce que** le stabilisant est un stabilisant du méthacrylate polymérisable capable de la copolymérisation avec le methacryloyl-chlorid.

6. Procédé selon la revendication 5, **caractérisé en ce que** le stabilisant est le 2- (3- (2H-benzotriazol-2-yl) -4-hydroxyphényl) le méthacrylate d'éthyle.

7. Procédé selon la revendication 1, **caractérisé en ce que** la quantité des additifs avec les groupes fonctionnels -NCO équivale molaire par rapport au nombre des groupes fonctionnels créés par un traitement au plasma de PE et la quantité des stabilisants par rapport à la quantité des groupes fonctionnels - NCO est dans un rapport molaire de 1: 1.

8. Procédé selon la revendication 1, **caractérisé en ce que** la quantité du methacryloyl-chlorid correspond au nombre des moles des groupes fonctionnels créés par un traitement au plasma de PE, tandis que la quantité des groupes fonctionnels résultante d'un traitement au plasma de PE est de 0,1 à 10%pds et les groupes méthacrylate sont amenés à réagir avec un stabilisant polymérisable dans un rapport molaire de 1: 1 ou supérieur.
